Europäisches Patentamt

(19) European Patent Office

Office européen des brevets

(11) Veröffentlichungsnummer: **0 073 521**
**B1**

(12) **EUROPÄISCHE PATENTSCHRIFT**

(45) Veröffentlichungstag der Patentschrift:
13.07.88

(21) Anmeldenummer: **82108044.7**

(22) Anmeldetag: **01.09.82**

(51) Int. Cl.⁴: **H 05 B 3/26, B 60 R 1/06**

(54) Elektrische Heizung für einen Kraftfahrzeugspiegel.

(30) Priorität: 02.09.81 DE 3134713
15.05.82 DE 3218499

(43) Veröffentlichungstag der Anmeldung:
09.03.83 Patentblatt 83/10

(45) Bekanntmachung des Hinweises auf die Patenterteilung:
13.07.88 Patentblatt 88/28

(84) Benannte Vertragsstaaten:
AT CH DE FR GB LI NL SE

(56) Entgegenhaltungen:
DE - A - 2 919 968
DE - B - 2 907 433
GB - A - 2 054 329
US - A - 3 798 419
US - A - 4 237 366

(73) Patentinhaber: Kabelwerke Reinshagen GmbH,
Reinshagenstrasse 1, D-5600 Wuppertal 21 (DE)

(72) Erfinder: Eder, Bernd, Laaken 73d,
D-5600 Wuppertal 2 (DE)
Erfinder: Schlamm, Heinz-Werner, Dipl.-Ing.,
Reuterstrasse 22, D-5600 Wuppertal 11 (DE)

(74) Vertreter: Priebisch, Rüdiger, Dipl.-Ing.,
Dipl.-Wirtsch.-Ing. (FH), Kabelwerke Reinshagen GmbH
Patentabteilung Reinshagenstrasse 1,
D-5600 Wuppertal 21 (DE)

ACTORUM AG

**Beschreibung**

Die Erfindung betrifft eine elektrische Heizung zum Beheizen eines Spiegelglases mit einer beheizbaren Blechplatte eines Kraftfahrzeugspiegels gemäss Oberbegriff von Anspruch 1.

Aus der veröffentlichten deutschen Patentanmeldung DE-A1-2 919 968 ist ein Spiegelglas bekannt, auf dessen Rückseite zwei sich teilweise überlappende, beheizbare Blechplatten angeordnet sind. Die Beheizung kann durch mehrere flache Heizwiderstände, insbesondere des Kaltleiter- oder PTC-Typs, erfolgen, die im Überlappungsbereich angeordnet und wärme- und stromleitend mit den beiden Blechplatten flächig verbunden sind. Die Stromversorgung erfolgt über die beiden Blechplatten, die mit je einem angeformten, elektrischen Flachstecker versehen sind. Diese Ausbildung sieht als mechanische Verbindung zwischen den Heizwiderständen und den beiden Blechen einen leitenden Kleber vor. Zudem sind beide Bleche – unter Zwischenlage der Heizwiderstände – nebeneinander auf die Rückseite eines Spiegelglases aufgeklebt. Diese Montageart kann dann nicht befriedigen, wenn die eigentliche Heizung, das heisst die Blechplatte mit den Heizwiderständen, selbständig handhabbar sein soll, wie zum Beispiel bei der Herstellung oder beim Versand. Dann sorgt nur der leitende Kleber zwischen den Heizwiderständen und den Blechplatten für den mechanischen Zusammenhalt. Des weiteren können unterschiedliche Dikken der zwischen den Blechplatten anzuordnenden flachen Heizwiderstände, zum Beispiel infolge Toleranzabweichungen, sowohl zu einer minderwertigen elektrischen Kontaktgabe als auch zu einem geringeren mechanischen Zusammenhalt der Blechplatten führen.

Aus der US-A-4 237 366 ist ein einteiliges Wärmeverteilerblech mit einem flachen Heizwiderstand bekannt, der in einer Vertiefung des Wärmeverteilerbleches mit Abstand zum Spiegelglas des Kraftfahrzeugspiegels gelagert ist und dessen zweite Anschlussfläche von einem federnden Kontaktbügel mit Strom versorgt wird.

Die Erfindung geht im Oberbegriff des Patentanspruches 1 aus von dem Stand der Technik gemäss DE-A1-2 919 968. Ihr liegt die Aufgabe zugrunde, eine beheizbare Blechplatte zu schaffen, die selbständig gut handhabbar ist und einen guten mechanischen Zusammenhalt sowie dauerhaft gute elektrische Verbindungen aufweist.

Zur Lösung dieser Aufgabe schlägt die Erfindung eine Heizung mit den Merkmalen des Anspruchs 1 vor. Als Isolierschicht kann entweder eine Luftschicht oder eine auf die Blechplatte und/oder die Strombrücke aufgeklebte Isolierschicht, zum Beispiel aus einem doppelseitig klebenden Isolierband, dienen.

Das aus der vorgenannten deutschen Patentanmeldung DE-A1-2 919 968 bekannte Spiegelglas weist eine mittige Überlappung der beiden Blechplatten auf. Infolge dieser Überlappung ist die Rückseite, das heisst die von dem Spiegelglas abgewandte Seite der Blechplatten, uneben ausgebildet. Ein derartig gestaltete Heizung ist für ein Spiegelglas, an dessen Rückseite eine zum Beispiel elektromotorische Verstellvorrichtung angeordnet werden soll, schlecht verwendbar. Denn bei einer derartigen Vorrichtung wird auf der Rückseite des Spiegelglases – also hier auf der Rückseite der Blechplatte – ein flächiges Bauteil befestigt, an dem Teile der Verstellmechanik angeordnet sind. Dieses flächige Bauteil wird zum Beispiel als die Rückseite des Spiegelglases überdeckendes Kunststoffspritzteil ausgebildet, dem Bauteile für die Verstellmechanik angeformt sind. Das flächige Bauteil kann zum Beispiel mittels Kleben auf der Rückseite des Spiegelglases bzw. der Blechplatte befestigt werden; hierzu wird ein möglichst grosser Flächenkontakt zwischen dem Bauteil und dem Spiegelglas bzw. der Blechplatte benötigt.

In Fortbildung der Erfindung weist nun die Blechplatte zwischen den Heizwiderständen eine Ausnehmung auf, die breiter ist als der mittlere Bereich der Strombrücke, und erstreckt sich die Strombrücke mit ihrem mittleren Bereich mit Spiel innerhalb der Ausnehmung und in der Ebene der Blechplatte. Insbesondere kann die Blechplatte so ausgebildet sein, dass mindestens der Bereich der Blechplatte zwischen den Heizwiderständen und der mittleren Bereich der Strombrücke auf der von dem Spiegelglas abgewandten Seite mit einer Klebeschicht versehen sind. Die Verklebung kann derart erfolgen, dass mindestens nahezu die gesamte von dem Spiegelglas abgewandte Seite der Blechplatte und des mittleren Bereiches der Strombrücke mit einem doppelseitigen Klebeband versehen ist, das sich – insbesondere durch Anordnung von Ausschnitten – so um die aus der Ebene der Blechplatte herausragenden Bauteilen herum erstreckt, dass es nur parallel zur Ebene der Blechplatte verläuft.

Eine Ausführungsform der Erfindung ist dadurch gekennzeichnet, dass die erste Anschlussfläche des Heizwiderstandes über einen den Heizwiderstand übergreifenden Bügel aus Metallblech mit der Blechplatte strom- und wärmeleitend verbunden ist, dass die zweite Anschlussfläche mit der Strombrücke strom- und wärmeleitend verbunden ist und dass an der Strombrücke einerseits und an einem Bügel oder an der Blechplatte selbst andererseits elektrische Anschlüssse angeordnet sind. Der Bügel kann omegaförmig gebogen und elastisch federnd ausgebildet sein und vor seiner Montage eine konkave Durchbiegung im Mittelbereich aufweisen. Der Bügel kann mit der Blechplatte verschweisst oder vernietet sein. Beim Vernieten ist es vorteilhaft, wenn mindestens ein aus der Blechplatte herausgedrückter Hohlzapfen sich durch eine Bohrung eines Bügels erstreckt und zu einer Hohlniet verformt ist. Nach dem Verschweissen oder Vernieten ist die genannte Durchbiegung des Bügels mindestens zum Teil aufgehoben, und die sich ergebene Federkraft dient zum Andrücken des Heizwiderstandes an die Blechplatte. Bei einer Blechplatte, die mit dem Bügel verschweisst ist, können auf die Blechplatte und auf einem Endbereich der Strombrücke winklig abgebogene elektrische Flachsteckzungen geschweisst werden. Auch an dem Bügel können Mittel zur Lagefixierung des Heizwiderstandes angeordnet sein. Der Heizwiderstand kann eine mittige Vertiefung oder ein mittiges Loch aufweisen, und am Endbereich der Strombrücke und/oder am Bügel kann ein Vorsprung angeordnet sein, der in die mittige Vertiefung oder in das mittige Loch eingreift und somit als Montage- und Befestigungshilfe dient.

Die Blechplatte nach der Erfindung ist einteilig ausgebildet und trägt alle erforderlichen Teile für die Beheizung. Die Heizwiderstände sind in mechanischer und elektrischer Hinsicht dauerhaft und sicher montiert, und für eine gute Wärmeverteilung und Ableitung ist gesorgt.

Die Ausbildung nach dem Patentanspruch 3 ermöglicht nicht nur die Lösung der Aufgabe, sondern verbessert die Anwendung der Erfindung bei gekrümmten Spiegelgläsern: Durch die Anordnung des mittleren Teils der Strombrücke in der Ebene der Blechplatte erhält die Heizanordnung im Bereich zwischen den Heizwiderständen ein geringes Widerstandsmoment gegen Biegung. Infolge dessen kann die Heizanordnung, das heisst die Blechplatte mit Strombrücke und Heizwiderständen, der Krümmung eines gebogenen Spiegelglases besser angepasst werden, was insbesondere bei einer Verklebung zwischen verschiedenen Bauteilen vorteilhaft ist.

Durch die erfindungsgemässe Ausbildung wird die von den Heizständen erzeugte Wärme zum einen z.B. über die Bügel auf den Bereich der Blechplatte rings um den Heizwiderständen und von dort auf das Spiegelglas geleitet. Zum anderen wird die Wärme auf die Endbereiche der Strombrücke geleitet, von wo sie teils über die elektrischen Isolierschichten auf die Blechplatte unterhalb der Heizwiderstände, aber vor allem auch über den mittleren Bereich der Strombrücke auf den mittleren Bereich der Blechplatte bzw. des Spiegelglases geleitet wird. Hierdurch wird ein schnelles Aufheizen des Spiegelglases erzielt, was bei einer Vereisung und dergleichen des Spiegelglases dazu führt, dass zuerst der mittlere Bereich des Spiegelglases von Eis und dergleichen befreit wird.

In der Zeichnung sind zwei Ausführungsbeispiele der Erfindung dargestellt, die im nachfolgenden näher beschrieben werden.

Figur 1 zeigt eine erste fertig montierte, zu beheizende Blechplatte.

Figur 2 zeigt eine Einzelheit der Blechplatte im Schnitt II–II in vergrössertem Massstab vor der Montage und in strichpunktierter Linie nach einer Vernietung.

Figur 2a zeigt den gleichen Bereich wie Figur 2, jedoch bei Anwendung eines Schweissverfahrens anstelle einer Nietung.

Figur 3 zeigt die Strombrücke in Seitenansicht mit aufgelegten Heizwiderständen.

Figur 4 zeigt eine Draufsicht auf die Strombrücke nach Figur 3.

Figur 5 zeigt eine Einzelheit der Strombrücke im Schnitt V–V nach Figur 4 in vergrössertem Massstab.

Figur 6 zeigt einen Bügel in Seitenansicht.

Figur 7 zeigt den Bügel nach Figur 6 in der Ansicht von unten.

Figur 8 zeigt den Schnitt VIII–VIII in Figur 1.

Figur 9 zeigt eine zweite fertig montierte, zu beheizende Blechplatte, auf deren Rückseite ein doppelseitig klebendes Band aufgelegt ist, das mit einem flächig aufliegenden Bauteil verbunden werden soll.

Figur 10 zeigt den Schnitt X–X in Figur 9.

Figur 11 zeigt den Schnitt XI–XI in Figur 9.

Figur 12 zeigt den Schnitt XII–XII in Figur 9, wobei das aufzuklebende Bauteil immer strichpunktiert angedeutet ist.

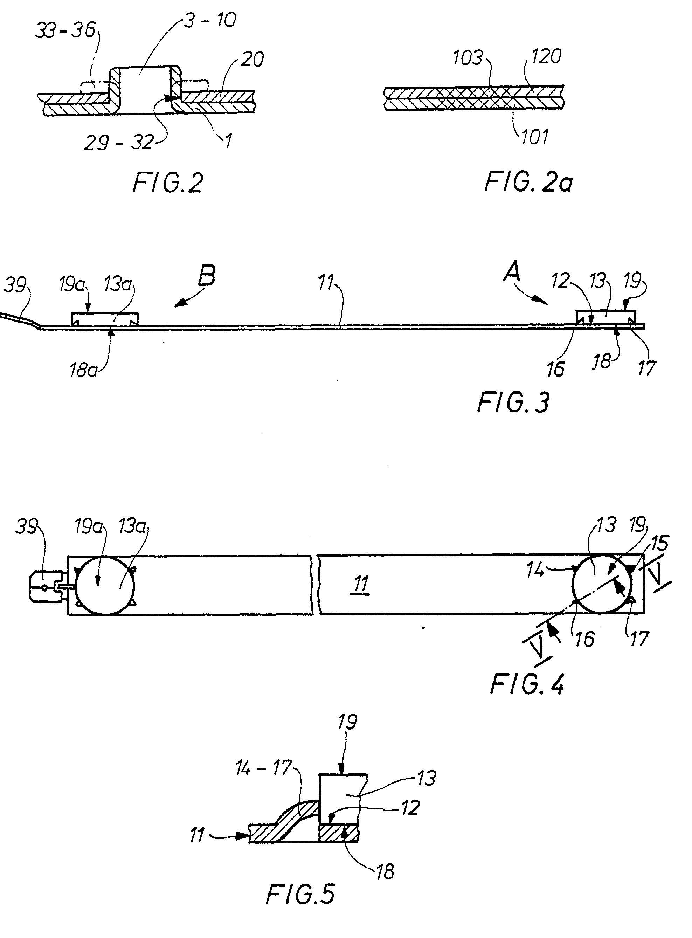

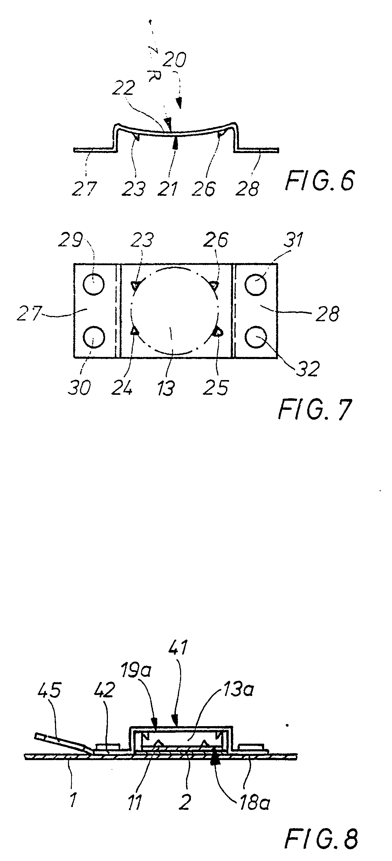

Die zu beheizende Blechplatte 1 besteht aus etwa 0,4 mm dickem, flachen verzinktem Stahlblech. Die Blechplatte 1 ist dem Umriss eines zu beheizenden Spiegels für Kraftfahrzeuge angepasst und nahezu rechteckig ausgebildet. Auf die Blechplatte 1 ist ein etwa diagonal verlaufender, isolierender Streifen 2 aus doppelseitigem Klebeband aufgeklebt. Um die Endbereiche der Streifen 2 sind an den Längsseiten jeweils vier Hohlzapfen 3 bis 10 aus der Blechplatte 1 herausgezogen (Figur 2). Auf den Streifen 2 ist eine streifenförmige Strombrücke 11 aus Metallblech flächig aufgeklebt, erstreckt sich also planparallel zu der Blechplatte 1. In einem Endbereich A der Strombrücke 11 ist eine elektrische Kontaktfläche 12 für einen ersten flachen elektrischen Heizwiderstand 13, zum Beispiel für ein rundes Widerstandsplättchen mit PTC-Charakteristik, gebildet. Zur seitlichen Lagefixierung des Heizwiderstandes 13 dienen mehrere Ausprägungen oder Ausstanzungen 14 bis 17, die aus der Ebene der Strombrücke 11 herausragen. Bei der Verwendung eines runden Heizwiderstandes 13 genügen drei oder vier derartiger Ausprägungen oder Ausstanzungen 14 bis 17, Figur 4. Die Ausprägungen 14 bis 17 oder dergleichen können so auf die Abmessungen des Heizwiderstandes 13 abgestimmt werden, dass der Heizwiderstand 13 mit seitlichem Presssitz eingepasst werden kann, Figur 5. Der Heizwiderstand 13 liegt dann mit seiner unteren, zweiten Anschlussfläche 18 strom- und wärmeleitend direkt auf der Strombrücke 11 und indirekt über die Strombrücke 11 und den Streifen 2 wärmeleitend, aber nicht stromleitend auf der Blechplatte 1 auf, vergleiche auch Figur 8.

Zum Andrücken des Heizwiderstandes 13 an die Strombrücke 11 und somit an die Blechplatte 1 und zum elektrischen Anschluss der oberen, ersten Anschlussfläche 19 des Heizwiderstandes 13 dient ein Bügel 20 aus federndem Metallblech. Der Bügel 20 ist zunächst omegaförmig ausgebildet, Figur 6, und überspannt die Kontaktfläche 12 der Strombrücke 11 und den Heizwiderstand 13 brückenförmig. Zur genauen Zuordnung zum Heizwiderstand 13 ragen an der Unterseite 21 des mittleren Brückenbereiches 22 Ausprägungen oder Ausstanzungen 23 bis 26 hervor, die den Heizwiderstand 13 seitlich umfassen. Auf diese seitliche Fixierung des Heizwiderstandes 13 durch den Bügel 20 kann auch verzichtet werden, wenn die nachfolgend beschriebene Vernietung erfolgt. Der Bügel 20 ist im Brückenbereich 22 vor der Montage leicht konkav durchgebogen, vergleiche Figur 6. Zur Verbindung mit der Blechplatte 1 sind in den Fussteilen 27 und 28 vier Löcher 29 bis 32 angeordnet, durch welche die Hohlzapfen 3 bis 10 der Blechplatte 1 geführt und zu Hohlnieten 33 bis 36 umgeformt sind. Dabei ist unter Aufhebung der konkaven Durchbiegung des Brückenteiles 22 eine hohe Anpresskraft zwischen dem Bügel 20 einerseits und der Strombrücke 11 und der Blechplatte 1 andererseits erzielt. Somit ist auch eine gute elektrische Verbindung sowohl zwischen der ersten Anschlussfläche 19 des Heizwiderstandes 13 und der Blechplatte 1 über den Bügel 20 als auch zwischen der zweiten Anschlussfläche 18 und der Strombrücke 11 hergestellt.

Im zweiten Endbereich B der Strombrücke 11 ist ein zweiter Heizwiderstand 13a angeordnet. Diese Anordnung ist mit der vorgeschriebenen identisch bis auf folgende Abweichungen:

Die Strombrücke 11 ist endseitig verlängert und abgekröpft. Seitenteile 37 und 38 sind zur Bildung einer Flachsteckzunge 39 teilweise abgeschert und umgebogen. Mit 40 ist eine Verstärkungssicke im Bereich der Kröpfung bezeichnet. der zweite Bügel 41 ist an einem Fussteil 42 verlängert und abgekröpft. Seitenteile 43 und 44 sind zur Bildung einer Flachsteckzunge 45 teilweise abgeschert und umgebogen. Mit 46 ist eine Verstärkungssicke im Bereich der Kröpfung bezeichnet.

Durch diese beiden vorbeschriebenen Abwandlungen sind die elektrischen Anschlüsse im Endbereich B gebildet: Über die Flachsteckzunge 39 folgt die elektrische Kontaktierung der Strombrücke 11 und somit der Anschlussflächen 18 und 18a (Figur 3), über die Flachsteckzunge 45 erfolgt die elektrische Kontaktierung des zweiten Bügels 41 und der Anschlussfläche 19a und – über die Blechplatte 1 und den Bügel 20 – der Anschlussfläche 19.

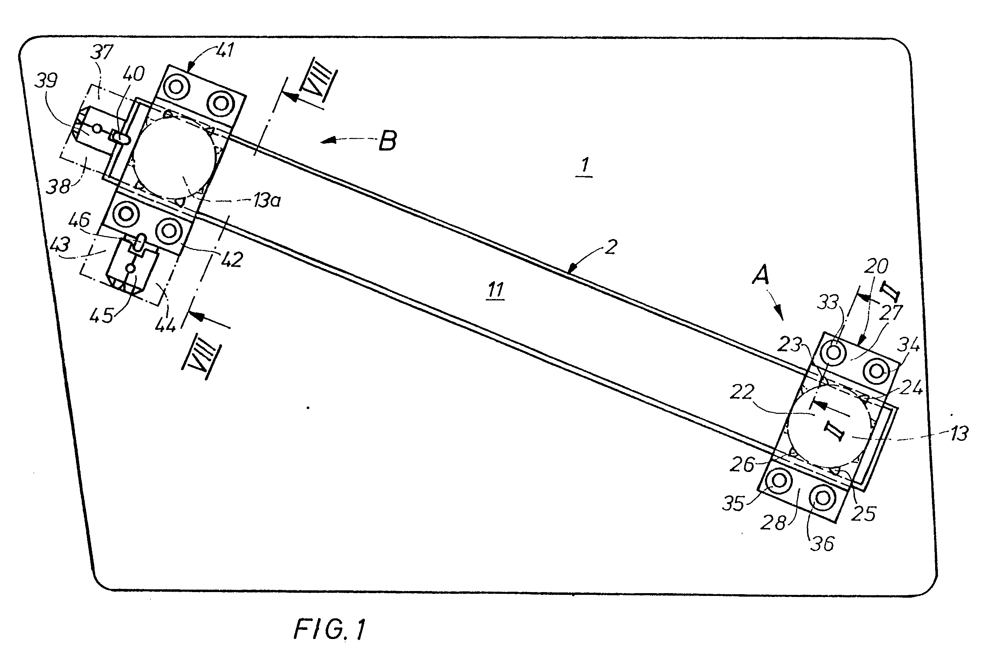

Anstelle der näher gezeigten und beschriebenen Nietung zwischen der Blechplatte 1 und den Bügeln 20 und 41 kann auch eine Verschweissung derselben erfolgen, dann kann gegebenenfalls auf die Anordnung von Hohlzapfen 3 bis 10 in der Blechplatte 1 und von entsprechenden Öffnungen 29 bis 32 in den Bügeln 20 und 41 verzichtet werden. Als Schweissverfahren kommen insbesondere das elektrische Widerstandsschweissen oder das Ultraschallschweissen in Frage. In Figur 2a ist eine Blechplatte 101 mit einem Bügel 120 über den Schweissbereich 103 verbunden. Mehrere Schweissbereiche 103 treten hier anstelle der Niete 33 bis 36 (Figur 1). Nach der Erfindung können auch mehr als zwei Heizwiderstände mit Hilfe einer oder mehrerer Strombrücken angeordnet werden.

Der Aufbau der zweiten Spiegelheizung nach den Figuren von 9 bis 12 stimmt zum Teil mit dem Aufbau des vorbeschriebenen ersten Ausführungsbeispieles überein. Die Abweichungen werden im folgenden näher beschrieben.

Die zu beheizende Blechplatte 201 besteht aus etwa 0,5 mm dickem Aluminiumblech und ist dem etwa rechteckigen Umriss eines zu beheizenden Spiegelglases 202 für Kraftfahrzeuge angepasst. Das Spiegelglas 202 ist mittels einer Klebeschicht 202a auf die Blechplatte 201 geklebt. Die Blechplatte 201 weist im Bereich ihrer Längsachse x–x eine Ausnehmung 203 auf. Neben den Schlitzenden sind flächige Isolierungen in Form von zwei Streifen 204 und 205 eines doppelseitigen Klebebandes aufgebracht. Ebenfalls in der Längsachse x–x ist eine streifenförmige Strombrücke 206 aus Aluminiumblech mit ca. 0,5 mm Dicke angeordnet. Ihr mittlerer Teil ist etwas schmaler als die Breite der Ausnehmung 203. Die Strombrücke 206 ist an den Schlitzenden so abgewinkelt, dass ihr mittlerer Teil 207 sich mit Spiel innerhalb der Ausnehmung 203 befindet, also in der Ebene y–y der Blechplatte 201. Der mittlere Teil 207 liegt also ebenfalls auf der Klebeschicht 202a auf. Die abgewinkelten Endbereiche 208 und 209 liegen auf den isolierten Klebestreifen 204 und 205 auf, erstrecken sich also planparallel zu der Blechplatte 201.

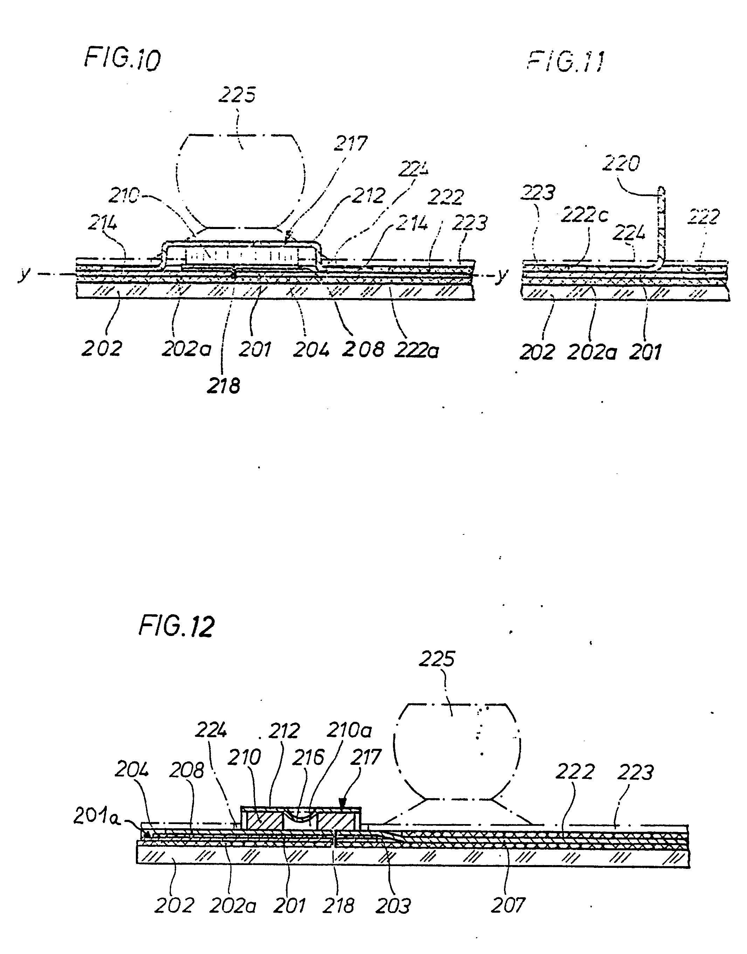

An den Endbereichen 208 und 209 der Strombrücke 206 sind zwei flache Heizwiderstände 210 und 211 aufgelegt und werden von zwei omegaförmigen Bügeln 212 und 213 aus federhartem, etwa 0,5 mm dickem Aluminiumblech, deren Fussteile 214 und 215 mit der Blechplatte 201 verschweisst sind, übergriffen (Figur 10).

Im folgenden wird die Befestigung des Heizwiderstandes 210 näher beschrieben.

Zur Lagefixierung und Kontaktierung des Heizwiderstandes 210 ist dieser kreisringförmig ausgebildet, weist also ein mittiges Durchgangsloch 210a auf, vergleiche Figur 11. In dieses Loch 210a greift ein aus dem Bügel 212 herausgedrückter Vorsprung 216, so dass der Heizwiderstand 210 gegen jedwede Lageveränderung geschützt ist. Die elektrische Kontaktierung erfolgt zum einen über den Bügel 212, der auf der oberen Kontaktfläche 217 des Heizwiderstandes 210 aufliegt, und über die Blechplatte 201 und zum anderen über die Strombrücke 206, auf welcher der Heizwiderstand 210 mit seiner unteren Kontaktfläche 218 aufliegt.

Die Befestigung des Heizwiderstandes 211 ist identisch mit der Befestigung des Heizwiderstandes 210.

Auf den dem Heizwiderstand zugeordneten Endbereich 209 der Strombrücke 206 ist als Pluskontakt eine rechtwinklig abgebogene Flachsteckzunge 219 geschweisst. Daneben ist als Minuskontakt auf die Blechplatte 201 eine zweite abgewinkelte Flachsteckzunge 220 geschweisst. Die Verschweissung erfolgt nach dem Ultraschallverfahren. Über diese Flachsteckzungen 219 und 220 folgt die Stromversorgung der Heizwiderstände 210 und 211.

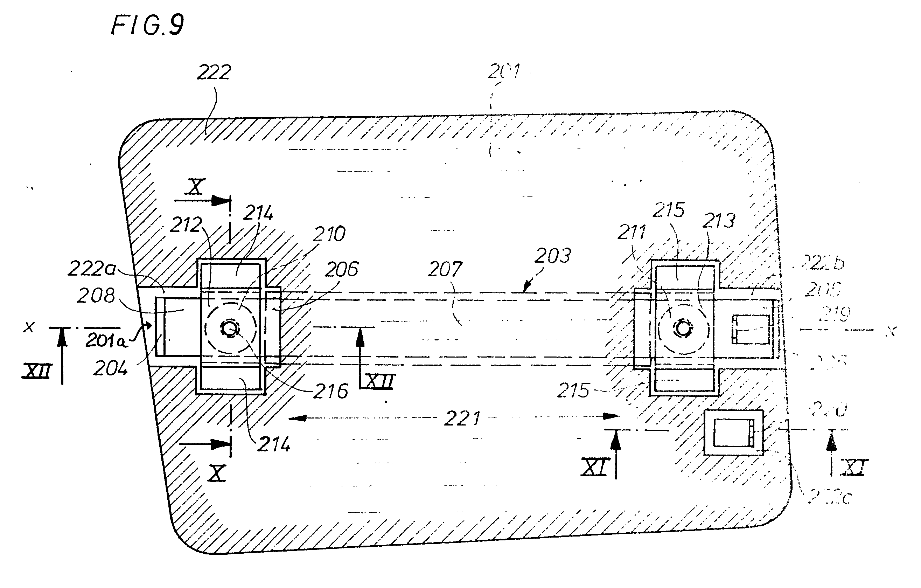

Auf der von dem Spiegelglas 202 abgewandten Seite 201a ist ein Bereich 221 – der Blechplatte 201 und der Strombrücke 206 – zwischen den Heizwiderständen 210 und 211 völlig eben ausgebildet. Auf diesen Bereich 221 und auf die anderen benachbarten Bereiche der Blechplatte 201, die sich in der gleichen Ebene y–y befinden, ist eine Klebeschicht 222 in Form eines doppelseitigen klebenden Bandes aufgebracht. Die Klebeschicht 222 ist in Figur 9 schraffiert. In den Bereichen, in denen sich die Erhebungen befinden, nämlich die Klebestreifen 204, 205, die Endbereiche 208, 209 der Strombrücke 206, die Heizwiderstände 210, 211 und die Bügel 212, 213 sowie die Flachsteckzungen 219 und 220, ist die Klebeschicht 222 mit Ausschnitten 222a, 222b, 222c, versehen.

Die Klebeschicht 222 dient zur Befestigung eines flachen Bauteiles 223 aus gespritztem Kunststoff, das in den Figuren 10 bis 12 in strichpunktierten Linien angedeutet ist. Um das Bauteil 223 flächig auf die Klebeschicht 222 aufbringen zu können, sind im Bauteil 223 in den Bereichen der oben schon aufgezählten Erhebungen Durchbrüche 224 angeordnet, so dass die Erhebungen diese Durchbrüche 224 durchdringen und, zum Beispiel die Flachsteckzungen 219, 220, frei zugänglich bleiben. Dem Bauteil 223 sind Vorsprünge 225 angeformt, an die kraft- oder formschlüssig Teile einer nicht dargestellten Verstellvorrichtung für das Spiegelglas 202 angreifen können.

Das zu beheizende Bauteil ist vorstehend mit Blechplatte bezeichnet worden. Diese Bezeichnung soll sowohl relativ dicke, starre Bleche, als auch relativ dünne, flexible Blechfolien umfassen.

## Patentansprüche

1. Elektrische Heizung zum Beheizen eines Spiegelglases eines Kraftfahrzeugspiegels mit einer beheizbaren Blechplatte (1; 101; 201), die auf der Rückseite des Spiegelglases anliegt, und mit mindestens zwei flachen, elektrischen Heizwiderständen (13, 13a; 210), die mit je einer ersten Anschlussfläche (19, 19a; 217) in strom- und wärmeleitender Verbindung mit der Blechplatte (1; 101; 201) angeordnet sind und mit je einer zweiten Anschlussfläche (18, 18a; 218) über eine weitere Blechplatte, die in Form einer Strombrücke (11; 206) im wesentlichen planparallel und elektrisch isoliert zu der Blechplatte (1; 101; 201) verläuft, dadurch gekennzeichnet, dass die auf der Rückseite des Spiegelglases zur Anlage kommende Blechplatte (1; 101; 201) der Heizung aus einem einzigen einteiligen Blech besteht, das etwa dem Umriss des Spiegelglases angepasst ist, dass die Strombrücke (11; 206) die Form eines schmalen Blechstreifens hat und dass an der Strombrücke (11; 206) aus der Ebene derselben herausragende Mittel (14 bis 17) zur seitlichen Lagefixierung der Heizwiderstände (13, 13a) angeordnet sind.

2. Heizung nach Anspruch 1, dadurch gekennzeichnet, dass zwischen der Blechplatte (1; 101; 201) und der Strombrücke (11; 206) eine elektrische Isolierschicht (2; 204; 205) angeordnet ist, die auf der Blechplatte (1; 101; 201) und/oder der Strombrücke (11; 206) haftet.

3. Heizung nach Anspruch 1, dadurch gekennzeichnet, dass die Blechplatte (201) zwischen den Heizwiderständen (210, 211) eine Ausnehmung (203) aufweist, die breiter ist als der mittlere Bereich (207) der Strombrücke (206), und dass die Strombrücke (206) mit ihrem mittleren Bereich (207) sich mit Spiel innerhalb der Ausnehmung (203) und in der Ebene (y–y) der Blechplatte (201) erstreckt und die gleiche Dicke aufweist wie die Blechplatte (201).

4. Heizung nach einem der Ansprüche 1 bis 3, dadurch gekennzeichnet, dass mindestens der Bereich (221) der Blechplatte (201) zwischen den Heizwiderständen (210, 211) und der mittlere Bereich (207) der Strombrücke (206) auf der von dem Spiegelglas (202) abgewandten Seite (201a) mit einer Klebeschicht (222) versehen sind.

5. Heizung nach Anspruch 3 und 4, dadurch gekennzeichnet, dass mindestens nahezu die gesamte von dem Spiegelglas (202) abgewandte Seite (201a) der Blechplatte (201) und des mittleren Bereiches (207) der Strombrücke (206) mit einem doppelseitigen Klebeband (222) versehen ist, das sich, insbesondere durch Anordnung von Ausschnitten, so um die aus der Ebene (y–y) der Blechplatte (201) herausragenden Bauteile (208–215, 219 und 220) herum erstreckt, dass es nur parallel zur Ebene (y–y) der Blechplatte (201) verläuft.

6. Blechplatte nach einem der Ansprüche 1 bis 5, dadurch gekennzeichnet, dass die erste Anschlussfläche (19, 19a; 217) des Heizwiderstandes (13, 13a; 210, 211) über einen den Heizwiderstand (13, 13a; 210, 211) übergreifenden Bügel (20, 41; 120; 212, 213) aus Metallblech mit der Blechplatte (1; 101; 201) strom- und wärmeleitend verbunden ist, dass die zweite Anschlussfläche (18, 18a; 218) mit der Strombrücke (11; 206) strom- und wärmeleitend verbunden ist und dass an der Strombrücke (11; 206) einerseits und an einem Bügel (41) oder an der Blechplatte (201) selbst andererseits elektrische Anschlüsse (39, 45; 219, 220) angeordnet sind.

7. Blechplatte nach Anspruch 6, dadurch gekennzeichnet, dass an dem Bügel (20, 41; 120; 212, 213) Mittel (23 bis 26) zur Lagefixierung des Heizwiderstandes (13, 13a) angeordnet sind.

8. Blechplatte nach einem der Ansprüche 1 bis 7, dadurch gekennzeichnet, dass der Heizwiderstand (210, 211) eine mittige Vertiefung oder ein mittiges Loch (210a) aufweist und an einem Endbereich (208) der Strombrücke (206) und/oder am Bügel (212, 213) ein Vorsprung (216) angeordnet ist, der in die mittige Vertiefung oder in das mittige Loch eingreift.

## Claims

1. An electrical heating system for heating a glass of a motor vehicle mirror, comprising a heatable metal plate (1, 101; 201) located on the rear of the mirror glass and at least two flat electric heating resistors (13, 13a; 210) each having a first connecting surface (19, 19a; 217) thermally and electrically connected to the metal plate (1; 101; 201) and a second connecting surface (18, 18a; 218) via a second metal plate, which is in the form of a current bridge (11; 206) and extends substantially plane-parallel to and electrically insulated from the metal plate (1, 101; 201) abutting the back of the mirror glass and forming part of the heating system comprises a single one-part sheet substantially adapted to the periphery of the mirror glass, that the current bridge (11; 206) is in the form of a narrow metal strip and that means (14–17) for securing the heating resistors (13, 13a) laterally in position are disposed on the current bridge (11; 206) and project from the plane thereof.

2. A heating system according to claim 1, characterised in that an electrical insulating layer (2; 204; 205) is disposed between the metal plate (1; 101; 201) and the current bridge (11; 206) and adheres to the metal plate (1; 101; 201) and/or the current bridge (11; 206).

3. A heating system according to claim 1, characterised in that the heating plate (201) has a recess (203) between the heating resistors (210, 211), the recess being wider than the central region (207) of the current bridge (206), and that the central region (207) of the current bridge extends with clearance inside the recess (203) and in the plane (y–y) of the metal plate (201) and has the same thickness as the metal plate (201).

4. A heating system according to one of claims 1 to 3, characterised in that at least the region (221) of the metal plate (201) between the heating resistors (210, 211) and the central region (207) of the current bridge (206) are provided with an adhesive layer (222) on the side (201a) remote from the mirror glass (202).

5. A heating system according to claims 3 and 4, characterised in that at least nearly the entire side (201a) of the metal plate (201) remote from the mirror glass (202) and of the central region (207) of the current bridge (206) is provided with a double-sided adhesive strip (222) which, more particularly by having portions cut out, extends around the components (208–215, 219 and 220) projecting from the plane (y–y) of the metal plate (201) so that it extends only parallel to the plane (y–y) of the metal plate (201).

6. A metal plate according to one of claims 1 to 5, characterised in that the first connecting surface (19, 19a, 217) of the heating resistor (13, 13a; 210, 211) is thermally and electrically connected to the metal plate (1; 101; 201) via a sheet-metal stirrup (20, 41; 120; 212, 213) extending over the heating resistor (13, 13a; 210, 211), the second connecting surface (18, 18a; 218) is thermally and electrically connected to the current bridge (11; 206) and electrical connections (39, 45; 219, 220) are disposed on the current bridge (11; 206) on the one hand and on a stirrup (41) or on the metal plate (201) itself on the other hand.

7. A metal plate according to claim 6, characterised in that means (23 to 26) for securing the heating resistor (13, 13a) in position are disposed on the stirrup (20, 41; 120; 212, 213).

8. A metal plate according to one of claims 1 to 7, characterised in that the heating resistor (210, 211) has a central recess or a central hole (210a) and a projection (216) is disposed at the end region (208) of the current bridge (206) and/or on the stirrup (212, 213) and extends into the central recess or into the central hole.

## Revendications

1. Chauffage électrique destiné à chauffer une glace d'un miroir de véhicule automobile comportant une plaque en tôle (1; 101; 201) chauffable, appliquée sur le côté arrière de la glace du miroir, et comportant au moins deux résistances chauffantes électriques plates (13, 13a; 210), lesquelles sont agencées avec respectivement une première surface de raccordement (19, 19a; 217) en liaison conductrice de courant et de chaleur avec la plaque en tôle (1; 101; 201) et avec respectivement une deuxième surface de raccordement (18, 18a; 218) par l'intermédiaire d'une autre plaque en tôle, laquelle s'étend de façon parallèle et plane et électriquement isolée par rapport à la plaque en tôle (1; 101; 201), caractérisé en ce que la plaque en tôle (1; 101; 201) du chauffage venant en appui sur le côté arrière de la glace du miroir consiste en une tôle unique d'une seule pièce, laquelle épouse sensiblement le contour de la glace du miroir, en ce que le pont électrique (11; 206) présente la forme d'une bande de tôle étroite et en ce que sur le pont électrique (11; 206) sont agencés des moyens (14 à 17) faisant saillie à partir du plan de celui-ci pour la fixation en position latérale des résistances chauffantes (13, 13a).

2. Chauffage selon la revendication 1, caractérisé en ce qu'entre la plaque en tôle (1; 101; 201) et le pont électrique (11; 206) est agencée une couche isolante électrique (2; 204; 205) qui adhère sur la plaque en tôle (1; 101; 201) et/ou sur le pont électrique (11; 206).

3. Chauffage selon la revendication 1, caractérisé en ce que la plaque en tôle (201) entre les résistances chauffantes (210, 211) présente un évidement (203) qui est plus large que la zone médiane (207) du pont électrique (206), et en ce que le pont électrique (206) par sa zone médiane (207) s'étend avec un certain jeu à l'intérieur de l'évidement (203) et dans le plan (y–y) de la plaque en tôle (201) et présente la même épaisseur que la plaque en tôle (201).

4. Chauffage selon l'une quelconque des revendications 1 à 3, caractérisé en ce qu'au moins la zone (221) de la plaque en tôle (201) située entre les résistances chauffantes (210, 211) et la zone médiane (207) du pont électrique (206) sont munies d'une couche adhésive (222) sur le côté (201a) opposé à la glace du miroir (202).

5. Chauffage selon les revendications 3 et 4, caractérisé en ce qu'au moins pratiquement la totalité du côté (201a) opposé à la glace du miroir (202) de la plaque en tôle (201) et de la zone médiane (207) du pont électrique (206) est munie d'un ruban adhésif (222) collant des deux côtés, lequel s'étend autour des éléments (208–215, 219 et 220) faisant saillie à partir du plan (y–y) de la plaque en tôle (201) de sorte qu'il s'étend uniquement de façon parallèle au plan (y–y) de la plaque en tôle (201).

6. Plaque en tôle selon l'une quelconque des revendications 1 à 5, caractérisée en ce que la première surface de raccordement (19, 19a; 217) de la résistance chauffante (13, 13a; 210, 211) est reliée via un étrier (20, 41; 120; 212, 213) en tôle métallique enjambant la résistance chauffante (13, 13a; 210, 211) à la plaque en tôle (1; 101; 201) de façon conductrice de courant et de chaleur, en ce que la deuxième surface de raccordement (18, 18a; 218) est reliée au pont électrique (11; 206) de façon conductrice de courant et de chaleur et en ce que sur le pont électrique (11; 206) d'une part et sur un étrier (41) ou sur la plaque en tôle (201) elle-même d'autre part, sont agencées des connexions électriques (39, 45; 219, 220).

7. Plaque en tôle selon la revendication 6, caractérisée en ce que sur l'étrier (20, 41; 120; 212, 213) sont agencés des moyens (23 à 26) pour la fixation en position de la résistance chauffante (13, 13a).

8. Plaque en tôle selon l'une quelconque des revendications 1 à 7, caractérisée en ce que la résistance de chauffage (210, 211) présente une dépression médiane ou un trou médian (210a) et sur une zone d'extrémité (208) du pont électrique (206) et/ou sur l'étrier (212, 213) est agencée une saillie (216) laquelle s'engage dans la dépression médiane ou dans le trou médian.

FIG.1

FIG.2

FIG. 2a

FIG.3

FIG.4

FIG.5

FIG.6

FIG. 7

FIG.8

FIG.9

## FIG.10

225

217

224

222

210

212

214

214

223

214

y — y

202    202a    201    204    208    222a

218

## FIG.11

223    220    222

222c    224

202    202a    201

## FIG.12

225

224    212    210a

204    208    210    216    217    222    223

201a

202    202a    201    218    203    207